(19) Europäisches Patentamt
European Patent Office
Office européen des brevets

(11) EP 1 095 099 B1

(12) **EUROPÄISCHE PATENTSCHRIFT**

(45) Veröffentlichungstag und Bekanntmachung des Hinweises auf die Patenterteilung:
**09.04.2003 Patentblatt 2003/15**

(21) Anmeldenummer: **99929193.3**

(22) Anmeldetag: **12.06.1999**

(51) Int Cl.[7]: **C08K 5/5399**, C08L 69/00

(86) Internationale Anmeldenummer:
**PCT/EP99/04062**

(87) Internationale Veröffentlichungsnummer:
**WO 00/000544 (06.01.2000 Gazette 2000/01)**

(54) **FLAMMWIDRIGE POLYCARBONAT-ABS-FORMMASSEN**

FLAME-RESISTANT POLYCARBONATE ABS MOULDING MATERIALS

MATIERES MOULEES A BASE DE POLYCARBONATE/PLASTIQUE ABS ININFLAMMABLES

(84) Benannte Vertragsstaaten:
**BE CH DE DK ES FI FR GB IT LI NL**

(30) Priorität: **26.06.1998 DE 19828535**

(43) Veröffentlichungstag der Anmeldung:
**02.05.2001 Patentblatt 2001/18**

(73) Patentinhaber: **BAYER AG**
**51368 Leverkusen (DE)**

(72) Erfinder:
- **ECKEL, Thomas**
  **D-41540 Dormagen (DE)**
- **ZOBEL, Michael**
  **D-40547 Düsseldorf (DE)**
- **WITTMANN, Dieter**
  **D-51375 Leverkusen (DE)**

(56) Entgegenhaltungen:
**EP-A- 0 728 811** **WO-A-97/40092**

- **PATENT ABSTRACTS OF JAPAN vol. 018, no. 377 (C-1225), 15. Juli 1994 (1994-07-15) & JP 06 100785 A (ASAHI CHEM IND CO LTD), 12. April 1994 (1994-04-12) -& DATABASE WPI Section Ch, Week 9419 Derwent Publications Ltd., London, GB; Class A17, AN 94-156806 XP002116351 " Dripping resistant, flame retardant thermoplastic resin compsn - contains dripping inhibitor resin of non-softening vinyl] contg. silicone resin and/or poly:phosphazene and phosphorus-contg flame retarder "**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft mit Phosphazenen und Phosphorverbindungen ausgerüstete Polycarbonat-ABS-Formmassen, die einen ausgezeichneten Flammschutz und sehr gute mechanische Eigenschaften wie Bindenahtfestigkeit oder Kerbschlagzähigkeit aufweisen.

In DE-A 196 16 968 werden polymerisierbare Phosphazenderivate, Verfahren zu deren Herstellung und deren Verwendung als aushärtbare Bindemittel für Lacke, Beschichtungen, Füllmittel, Spachtelmassen, Klebstoffe, Formteile oder Folien beschrieben.

In WO 97/400 92 werden flammgeschützte Formmassen aus thermoplastischen Polymeren und unsubstituierten Phosphazenen (Typ $PN_{n-x}$ $H_{1-y}$) beschrieben.

EP-A 728 811 beschreibt eine thermoplastische Mischung bestehend aus aromatischem Polycarbonat, Pfropfcopolymer, Copolymer und Phosphazenen, welche gute Flammschutzeigenschaften, Schlagzähigkeit und Wärmeformbeständigkeit aufweisen.

Eine Kombination aus Phosphazenen und Phosphorverbindungen wird weder in WO 97400 92 noch in EP-A 728 811 beschrieben.

Aufgabe der vorliegenden Erfindung ist die Bereitstellung von Polycarbonat/ABS-Formmassen mit einer ausgezeichneten Flammfestigkeit und Bindenahtfestigkeit, ausgezeichneten mechanischen Eigenschaften wie Kerbschlagzähigkeit und Spannungsrißstabilität. Dieses Eigenschaftsspektrum wird besonders bei Anwendungen im Bereich Datentechnik wie etwa für Gehäuse von Monitoren, Druckern, Printern, Kopierern usw. gefordert.

Es wurde nun gefunden, daß PC/ABS-Formmassen, die Phosphazene in Kombination mit Phosphorverbindungen und/oder Salzen von Phosphatverbindungen die gewünschten Eigenschaften aufweisen.

Gegenstand der Erfindung sind daher thermoplastische Formmassen enthaltend

A) 40 bis 99, vorzugsweise 60 bis 98,5 Gew.-Teile aromatisches Polycarbonat und/oder Polyestercarbonat

B) 0,5 bis 60, vorzugsweise 1 bis 40, insbesondere 2 bis 25 Gew.-Teile Pfropfpolymerisat von

B.1) 5 bis 95, vorzugsweise 30 bis 80 Gew.-% eines oder mehrerer Vinylmonomeren auf

B.2) 95 bis 5, vorzugsweise 20 bis 70 Gew.-% einer oder mehrerer Pfropfgrundlagen mit einer Glasumwandlungstemperatur <10°C, vorzugsweise <0°C, besonders bevorzugt < -20°C,

C) 0 bis 45, vorzugsweise 0 bis 30, besonders bevorzugt 2 bis 25 Gew.-Teile mindestens eines thermoplastischen Polymers, ausgewählt aus der Gruppe der Vinyl(co)polymerisate und Polyalkylenterephthalate,

D) 0,1 bis 50, vorzugsweise 2 bis 35, insbesondere 5 bis 25 Gew.-Teile mindestens einer Komponente, ausgewählt aus der Gruppe der Phosphazene der Formeln

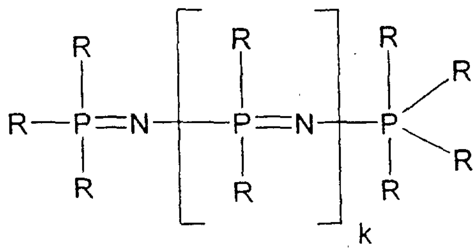

(Ia),

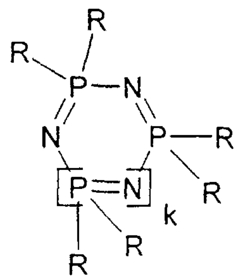

(Ib),

worin

R jeweils gleich oder verschieden ist und für Amino, jeweils gegebenenfalls halogeniertes, vorzugsweise mit Fluor halogeniertes $C_1$- bis $C_8$-Alkyl, oder $C_1$- bis $C_8$- Alkoxy, jeweils gegebenenfalls durch Alkyl, vorzugsweise $C_1$-$C_4$-Alkyl, und/oder Halogen, vorzugsweise Chlor und/oder Brom, substituiertes $C_5$- bis $C_6$-Cycloalkyl, $C_6$- bis $C_{20}$-Aryl, vorzugsweise Phenyl oder Naphthyl, $C_6$- bis $C_{20}$-Aryloxy, vorzugsweise Phenoxy, Naphthyloxy, oder $C_7$- bis $C_{12}$-Aralkyl, vorzugsweise Phenyl-$C_1$-$C_4$-alkyl, steht,

k für 0 oder eine Zahl von 1 bis 15, vorzugsweise für eine Zahl von 1 bis 10 steht,

E) 0,5 bis 20 Gew.-Teile, vorzugsweise 1 bis 18 Gew.-Teile, besonders bevorzugt 2 bis 15 Gew.-Teile, ausgewählt aus mindestens einer Phosphorverbindung der allgemeinen Formeln (IIa), (IIb), (IIc) und (IId),

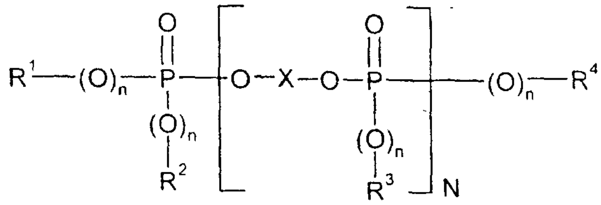

(IIa),

worin

R[1], R[2], R[3] und R[4], unabhängig voneinander jeweils gegebenenfalls halogeniertes $C_1$- bis $C_8$-Alkyl, jeweils gegebenenfalls durch Alkyl, vorzugsweise $C_1$-$C_4$-Alkyl, und/oder Halogen, vorzugsweise Chlor, Brom, substituiertes $C_5$- bis $C_6$-Cycloalkyl, $C_6$- bis $C_{20}$-Aryl oder $C_7$- bis $C_{12}$-Aralkyl stehen,

n unabhängig voneinander, 0 oder 1

N 0 bis 30 und

X einen ein- oder mehrkernigen aromatischen Rest mit 6 bis 30 C-Atomen bedeuten,

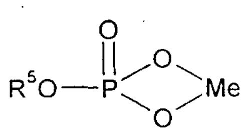

(IIb)

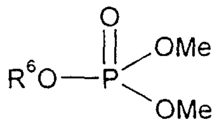

(IIc)

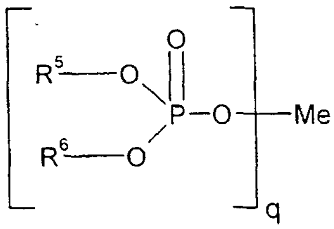

(IId)

worin

$R^5$ und $R^6$ unabhängig voneinander, gegebenenfalls halogeniertes $C_1$-$C_4$-Alkyl, jeweils gegebenenfalls durch Halogen und/oder $C_1$-$C_{10}$-Alkyl substituiertes $C_5$-$C_6$-Cycloalkyl, $C_6$-$C_{20}$-Aryl oder $C_7$-$C_{12}$-Aralkyl bedeuten,

oder

$R^5$ und $R^6$ im Falle der Formel (IId) eine Alkyl-Kette, vorzugsweise mit bis zu 6, insbesondere 2 oder 3 Kohlenstoffatomen bilden,

Me für ein Metall, ausgewählt aus der 1. bis 3. Hauptgruppe und VIII, 1B und 2B der Nebengruppe des Periodensystems steht,

und q durch die Wertigkeit des Metallions bestimmt wird,

F) 0 bis 5, vorzugsweise 0,1 bis 1, besonders bevorzugt 0,1 bis 0,5 Gew.-Teile fluoriertes Polyolefin.

**Komponente A**

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyestercarbonate z. B. DE-OS 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (III)

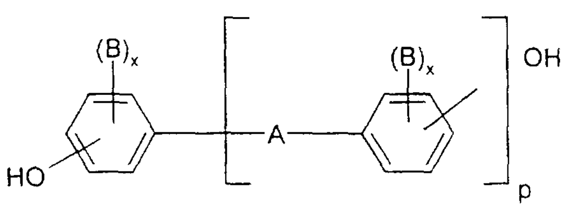

(III),

wobei

A eine Einfachbindung, $C_1$-$C_5$-Alkylen, $C_2$-$C_5$-Alkyliden, $C_5$-$C_6$-Cycloalkyliden, -O-, -SO-, -CO-, -S-, $-SO_2-$, $C_6$-$C_{12}$-Arylen, an das weitere aromatische gegebenenfalls Heteroatome enthaltende Ringe kondensiert sein können. oder ein Rest der Formel (IV) oder (V)

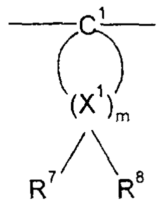

(IV)

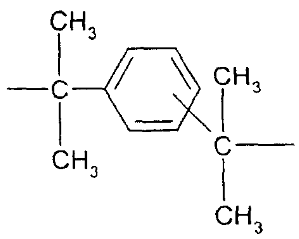

(V)

B jeweils $C_1$-$C_{12}$-Alkyl, vorzugsweise Methyl, Halogen, vorzugsweise Chlor und/oder Brom

x jeweils unabhängig voneinander 0, 1 oder 2,

p 1 oder 0 sind, und

$R^7$ und $R^8$ für jedes $X^1$ individuell wählbar, unabhängig voneinander Wasserstoff oder $C_1$-$C_6$-Alkyl, vorzugsweise Wasserstoff, Methyl oder Ethyl,

$X^1$ Kohlenstoff und

m eine ganze Zahl von 4 bis 7, bevorzugt 4 oder 5 bedeuten, mit der Maßgabe, daß an mindestens einen Atom $X^1$, $R^7$ und $R^8$ gleichzeitig Alkyl sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxylphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kembromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenyl-sulfon sowie deren di- und tetrabromierten oder chlorierten Derviate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate sind geeignete Kettenabbrecher beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%. bezogen auf die Molsumme der jeweils eingesetzten Diphenole.

Die thermoplastischen, aromatischen Polycarbonate haben mittlere Gewichtsmittelmolekulargewichte ($M_w$, gemessen z. B. durch Ultrazentrifuge oder Streulichtmessung) von 10 000 bis 200 000, vorzugsweise 20 000 bis 80 000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A) können auch 1 bis 25 Gew.-%, vorzugsweise 2,5 bis 25 Gew.-% (bezogen auf die Gesamtmenge an einzusetzenden Diphenolen) Polydiorganosiloxane mit Hydroxy-aryloxy-Endgruppen eingesetzt werden. Diese sind bekannt (s. beispielsweise US-Patent 3 419 634) bzw. nach literaturbekannten Verfahren herstellbar. Die Herstellung Polydiorganosiloxanhaltiger Copolycarbonate wird z. B. in DE-OS 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenole, insbesondere 2,2-Bis(3,5-dibrom-4-hydroxyphenyl)-propan.

Aromatische Dicarbonsäuredihalogenide zur Herstellung von aromatischen Polyestercarbonate sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$-$C_{22}$-Alkylgruppen oder durch Halogenatome substituiert sein können, sowie aliphatische $C_2$-$C_{22}$-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-OS 2 940 024 und DE-OS 3 007 934).

Als Verzweigungsmittel können beispielsweise 3- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polycarbonate und Polyestercarbonate liegt im Bereich 1,18 bis 1,4, vorzugsweise 1,22 bis 1,3 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch untereinander eingesetzt werden.

**<u>Komponente B</u>**

Die Komponente B umfaßt ein oder mehrere Pfropfpolymerisate von

B.1 5 bis 95, vorzugsweise 30 bis 80 Gew.-%, wenigstens eines Vinylmonomeren auf

B.2 95 bis 5, vorzugsweise 70 bis 20 Gew.-% einer oder mehrerer Pfropfgrundlagen mit Glasübergangstemperaturen < 10°C, vorzugsweise < 0°C, besonders bevorzugt < -20°C.
Die Pfropfgrundlage B.2 hat im allgemeinen eine mittlere Teilchengröße ($d_{50}$-Wert) von 0,05 bis 5 µm, vorzugsweise 0,10 bis 0,5 µm, besonders bevorzugt 0,20 bis 0,40 µm.

Monomere B.1 sind vorzugsweise Gemische aus

B.1.1 50 bis 99 Gew.-Teilen Vinylaromaten und/oder kernsubstituierten Vinylaromaten (wie beispielsweise Styrol, α-Methylstyrol, p-Methylstyrol, p-Chlorstyrol) und/oder Methacrylsäure-($C_1$-$C_4$)-Alkylester (wie z.B. Methylmethacrylat, Ethylmethacrylat) und

B.1.2 1 bis 50 Gew.-Teilen Vinylcyanide (ungesättigte Nitrile wie Acrylnitril und Methacrylnitril) und/oder (Meth)Acrylsäure-($C_1$-$C_8$)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat.
Besonders bevorzugte Monomere sind B.1.1 Styrol und B.1.2 Acrylnitril.
Für die Pfropfpolymerisate B geeignete Pfropfgrundlagen B.2 sind beispielsweise Dienkautschuke, EP(D) M-Kautschuke, also solche auf Basis Ethylen/Propylen und gegebenenfalls Dien, Acrylat-, Polyurethan-, Silikon-, Chloropren und Ethylen/Vinylacetat-Kautschuke.
Bevorzugte Pfropfgrundlagen B.2 sind Dienkautschuke (z. B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, daß die Glasübergangstemperatur der Komponente B.2 unterhalb <10°C, vorzugsweise <0°C, besonders bevorzugt < -10°C liegt.
Besonders bevorzugt ist reiner Polybutadienkautschuk.
Besonders bevorzugte Polymerisate B sind z.B. ABS-Polymerisate (Emulsions-, Masse- und Suspensions-ABS), wie sie z. B. in der DE-OS 2 035 390 (=US-PS 3 644 574) oder in der DE-OS 2 248 242 (=GB-PS 1 409 275) bzw. in Ullmann, Enzyklopädie der Technischen Chemie, Bd. 19 (1980), S. 280 ff. beschrieben sind. Der Gelanteil der Pfropfgrundlage B.2 beträgt mindestens 30 Gew.-%, vorzugsweise mindestens 40 Gew.-% (in Toluol gemessen).
Die Pfropfcopolymerisate B werden durch radikalische Polymerisation, z.B. durch Emulsions-, Suspensions-, Lösungs- oder Massepolymerisation, vorzugsweise durch Emulsionspolymerisation hergestellt.
Besonders geeignete Pfropfkautschuke sind auch ABS-Polymerisate, die durch Redox-Initiierung mit einem Initiatorsystem aus organischem Hydroperoxid und Ascorbinsäure gemäß US-P 4 937 285 hergestellt werden.
Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen.
Geeignete Acrylatkautschuke gemäß B.2 der Polymerisate B sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören $C_1$-$C_8$-Alkylester, beispielsweise Methyl-, Ethyl-, Butyl-, n-Octyl- und 2-Ethylhexylester; Halogenalkylester, vorzugsweise Halogen-$C_1$-$C_8$-alkylester, wie Chlorethylacrylat sowie Mischungen dieser Monomeren.
Zur Vernetzung können Monomere mit mehr als einer polymerisierbaren Doppelbindung copolymerisiert werden. Bevorzugte Beispiele für vemetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.
Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.
Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage B.2.
Bei cyclischen vernetzenden Monomeren mit mindestens 3 ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z. B. Acrylnitril, Styrol, α-Methylstyrol, Acrylamide, Vinyl-$C_1$-$C_6$-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.
Weitere geeignete Pfropfgrundlagen gemäß B.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.
Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).
Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

**Komponente C**

Die Komponente C umfaßt ein oder mehrere thermoplastische Vinyl (co)polymerisate C.1 und/oder Polyalkylenterephthalate C.2.
Geeignet sind als Vinyl(co)Polymerisate C.1 Polymerisate von mindestens einem Monomeren aus der Gruppe der Vinylaromaten, Vinylcyanide (ungesättigte Nitrile), (Meth)Acrylsäure-($C_1$-$C_8$)-Alkylester, ungesättigte Carbonsäuren sowie Derivate (wie Anhydride und Imide) ungesättigter Carbonsäuren. Insbesondere geeignet sind (Co)Polymerisate aus

C.1.1 50 bis 99, vorzugsweise 60 bis 80 Gew.-Teilen Vinylaromaten und/oder kernsubstituierten Vinylaromaten wie beispielsweise Styrol, α-Methylstyrol, p-Methylstyrol, p-Chlorstyrol) und/oder Methacrylsäure-($C_1$-$C_8$)-Alkylester wie z.B. Methylmethacrylat, Ethylmethacrylat), und

C.1.2 1 bis 50, vorzugsweise 20 bis 40 Gew.-Teilen Vinylcyanide (ungesättigte Nitrile) wie Acrylnitril und Methacrylnitril und/oder (Meth)Acrylsäure-($C_1$-$C_8$)-Alkylester (wie z.B. Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate C.1 sind harzartig, thermoplastisch und kautschukfrei.
Besonders bevorzugt ist das Copolymerisat aus C.1.1 Styrol und C.1.2 Acrylnitril.
Die (Co)Polymerisate gemäß C.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise Molekulargewichte $\overline{M}_w$ (Gewichtsmittel, ermittelt durch Lichtstreuung oder Sedimentation) zwischen 15 000 und 200 000.
Die Polyalkylenterephthalate der Komponente C.2 sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.
Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Mol-%, bezogen auf die Diolkomponente Ethylenglykol- und/oder Butandiol-1,4-Reste.
Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure. 4,4'-Diphenyldicarbonsäure, Bernsteinsäure, Adipinsäure, Sebacinsäure, Azelainsäure, Cyclohexan-diessigsäure.
Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloalipahtische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxyphenyl)-propan und 2,2-Bis-(4-hydroxypropoxyphenyl)-propan (DE-OS 2 407 674, 2 407 776, 2 715 932).
Die Polyalkylenterephthalate können durch Einbau relativ kleiner Mengen 3- oder 4-wertiger Alkohole oder 3- oder 4-basischer Carbonsäuren, z.B. gemäß DE-OS 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.
Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

**Komponente D**

Phosphazene gemäß Komponente D, welche gemäß der vorliegenden Erfindung eingesetzt werden, sind lineare Phosphazene gemäß Formel (Ia) und cyclische Phosphazene gemäß Formel (Ib)

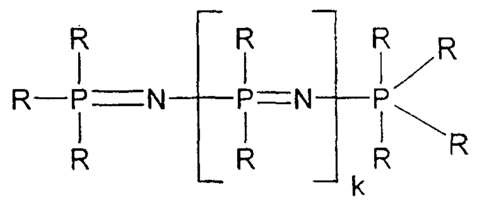

(Ia),

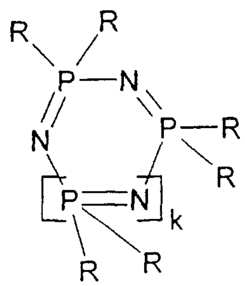

(Ib),

wobei k und R die oben angegebene Bedeutung haben.

Beispielhaft seien genannt:

Propoxyphosphazen, Phenoxyphosphazen, Methylphenoxyphosphazen, Aminophosphazen und Fluoralkylphosphazene.

Bevorzugt ist Phenoxyphosphazen.

Die Phosphazene können allein oder als Mischung eingesetzt werden. Der Rest R kann immer gleich sein oder 2 oder mehr Reste in den Formeln (Ia) und (Ib) können verschieden sein.

Die Phosphazene und deren Herstellung sind beispielsweise in EP-A 728 811, DE-A 1 961668 und WO 97/40092 beschrieben.

**Komponente E**

Die Komponente E umfaßt eine oder mehrere Phosphor-Verbindungen oder eine Mischung aus wenigstens einer Mono- und wenigstens einer Oligomeren-Phosphorverbindung der oben genannten Formeln (IIa), (IIb), (IIc) und (IId),

In der Formel (IIa) haben $R^1$, $R^2$, $R^3$ und $R^4$, die oben angegebenen Bedeutungen. Bevorzugt stehen $R^1$, $R^2$, $R^3$ und $R^4$ unabhängig voneinander für $C_1$-$C_4$-Alkyl, Phenyl, Naphthyl oder Phenyl-$C_1$-$C_4$-alkyl. Die aromatischen Gruppen $R^1$, $R^2$, $R^3$ und $R^4$ können ihrerseits mit Halogen- und/oder Alkylgruppen, vorzugsweise Chlor, Brom und/oder $C_1$-$C_4$-Alkyl substituiert sein. Besonders bevorzugte Aryl-Reste sind Kresyl. Phenyl, Xylenyl, Propylphenyl oder Butylphenyl sowie die entsprechenden bromierten und chlorierten Derivate davon.

X in der Formel (IIa) bedeutet einen ein- oder mehrkernigen aromatischen Rest mit 6 bis 30 C-Atomen. Dieser leitet sich vorzugsweise von Diphenolen der Formel (III) ab wie z.B. Diphenylphenol, Bisphenol A bzw. von Resorcin oder Hydrochinon oder deren chlorierten oder bromierten Derivaten.

n in der Formel (IIa) kann, unabhängig voneinander, 0 oder 1 sein, vorzugsweise ist n gleich 1.

N steht für Werte von 0 bis 30, vorzugsweise für einen durchschnittlichen Wert von 0,3 bis 20, besonders bevorzugt 0,5 bis 10, insbesondere 0,5 bis 6.

Als erfindungsgemäße Komponente E werden insbesondere Mischungen aus vorzugsweise 10 bis 90 Gew.-%, vorzugsweise 12 bis 40 Gew.-%, wenigstens einer Monophosphorverbindung und wenigstens einer oligomeren Phosphorverbindung der Formel (IIa) beziehungsweise eines Gemisches von oligomeren Phosphorverbindungen in Mengen von 10 bis 90 Gew.-%, vorzugsweise 60 bis 88 Gew.-%. bezogen auf die Gesamtmenge an Phosphorverbindungen, eingesetzt.

Monophosphorverbindungen der Formel (IIa) sind insbesondere Tributylphosphat, Tris-(2-chlorethyl)-phosphat, Tris-(2,3-dibromprobyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphensäurediphenylester, Phenylphosphonsäurediethylester, Triphenylphosphinoxid oder Trikresylphosphinoxid.

Die Mischungen aus monomeren und oligomeren Phosphorverbindungen der Formel (I) weisen durchschnittliche N-Werte von 0,3 bis 20, bevorzugt 0,5 bis 10, insbesondere von 0,5 bis 6 auf.

Die Phosphorverbindungen gemäß Komponente E sind bekannt (vgl. z.B. EP-A 363 608, EP-A 640 655) oder lassen sich nach bekannten Methoden in analoger Weise herstellen (z.B. Ullmanns Encyklopädie der technischen Chemie, Bd. 18, S. 301 ff. 1979; Houben-Weyl, Methoden der organischen Chemie, Bd. 12/1, S. 43; Beilstein Bd. 6, S. 177).

Die erfindungsgemäßen Formmassen können als Phosphorverbindungen Metallverbindungen von Monoestern der Phosphorsäure der Formel (IIb) und/oder (IIc),

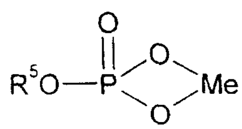

(IIb)

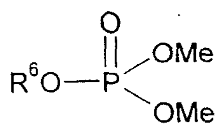

(IIc)

oder Metallverbindungen von Diestern der Phosphorsäure gemäß Formel (IId) enthalten

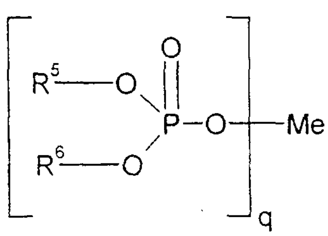

(IId),

worin $R^5$ und $R^6$, Me und q die zuvor beschriebene Bedeutung haben.

$R^5$ und $R^6$ stehen unabhängig voneinander vorzugsweise für gegebenenfalls halogeniertes (vorzugsweise durch Chlor und/oder Brom) $C_1$-$C_{15}$-, insbesondere $C_1$-$C_{10}$-Alkyl, jeweils gegebenenfalls durch Halogen (vorzugsweise

Chlor und/oder Brom) und/oder $C_1$-$C_6$-, insbesondere $C_1$-$C_4$-Alkyl, insbesondere Methyl, Ethyl, n-, iso-Propyl, substituiertes Cyclopentyl. Cyclohexyl, Phenyl, Naphthyl, Phenyl-$C_1$-$C_4$-alkyl (wie Benzyl).

$R^5$ und $R^6$ stehen unabhängig voneinander besonders bevorzugt für Kresyl, Phenyl, Xylenyl, Propylphenyl oder Butylphenyl sowie die entsprechenden bromierten und chlorierten Derivate davon.

Geeignete Metalle Me stellen die 1. bis 3. Hauptgruppe sowie die Nebengruppe VIII, IB und IIB des Periodensystems (nach Mendelejew) dar, bevorzugt sind Metalle aus der 2, und 3. Hauptgruppe und der II. Nebengruppe.

Besonders bevorzugt sind die Verbindungen der Metalle Mg, Ca, Ba, Bor. Al und Zn.

Zur Herstellung der erfindungsgemäßen Metallverbindungen der Phosphorsäureester sind literaturbekannte Verfahren wie beispielsweise das Umesterungsverfahren ausgehend von Triestern der Phosphorsäure oder das Säurehalogenid-Verfahren, ausgehend von Phosphorylchlorid geeignet (EP-A 0 801 116; J. Org. Chem. 1978, Vol. 43, Nr. 1, S. 24-31).

Vorzugsweise werden bei der Herstellung der erfindungsgemäßen Phosphorsäureester die anorganischen Reaktionskomponenten in feinstteiliger Form eingesetzt. Die durchschnittlichen Teilchendurchmesser sind ≤1 µm, vorzugsweise ≤200 nm.

## Komponente F

Die fluorierten Polyolefine F sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser $d_{50}$ von 0,05 bis 1 000, vorzugsweise 0,08 bis 20 µm. Im allgemeinen haben die fluorierten Polyolefine F eine Dichte von 1,2 bis 2,3 g/cm³. Bevorzugte fluorierte Polyolefine F sind Polytetrafluorethylen, Polyvinylidenfluorid, Tetrafluorethylen(Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654; "Modern Plastics Encyclopedia", 1970-1971, Band 47, Nr. 10 A, Oktober 1970, Mc Graw-Hill, Inc., New York, Seite 134 und 774; "Modern Plastica Encyclopedia", 1975-1976, Oktober 1975, Band 52, Nr. 10 A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxidisulfat bei Drucken von 7 bis 71 kg/cm² und bei Temperaturen von 0 bis 200°C, Vorzugsweise bei Temperaturen von 20 bis 100°C. (Nähere Einzelheiten s. z. B. US-Patent 2 393 967). Je nach Einsatzform kann die Dichte dieser Materialien zwischen 1,2 und 2,3 g/cm³, die mittlere Teilchengröße zwischen 0,5 und 1 000 µm liegen.

Erfindungsgemäß bevorzugte fluorierte Polyolefine F sind Tetrafluorethylenpolymerisate mit mittleren Teilchendurchmesser von 0,05 bis 20 µm, vorzugsweise 0,08 bis 10 µm, und eine Dichte von 1,2 bis 1,9 g/cm³ und werden vorzugsweise in Form einer koagulierten Mischung von Emulsionen der Tetrafluorethylenpolymerisate F mit Emulsionen der Pfropfpolymerisate B eingesetzt.

Geeignete, in Pulverform einsetzbare fluorierte Polyolefine F sind Tetrafluorethylenpolymerisate mit mittleren Teilchendurchmesser von 100 bis 1 000 µm und Dichten von 2,0 g/cm³ bis 2,3 g/cm³.

Zur Herstellung einer koagulierten Mischung aus B und F wird zuerst eine wäßrige Emulsion (Latex) eines Pfropfpolymerisates B mit einer feinteiligen Emulsion eines Tetrafluorethylenpolymerisates F vermischt; geeignete Tetrafluorethylenpolymerisat-Emulsionen besitzen üblicherweise Feststoffgehalte von 30 bis 70 Gew-.%. insbesondere von 50 bis 60 Gew.-%, vorzugsweise von 30 bis 35 Gew.-%.

Die Mengenangabe bei der Beschreibung der Komponente B kann den Anteil des Pfropfpolymerisats für die koagulierte Mischung aus Pfropfpolymerisat und fluoriertem Polyolefinen einschließen.

In der Emulsionsmischung liegt das Gleichgewichtsverhältnis Pfropfpolymerisat B zum Tetrafluorethylenpolymerisat F bei 95:5 bis 60:40. Anschließend wird die Emulsionsmischung in bekannter Wiese koaguliert, beispielsweise durch Sprühtrocknen, Gefriertrocknung oder Koagulation mittels Zusatz von anorganischen oder organischen Salzen, Säuren, Basen oder organischen, mit Wasser mischbaren Lösemitteln, wie Alkoholen, Ketonen, vorzugsweise bei Temperaturen von 20 bis 150°C, insbesondere von 50 bis 100°C. Falls erforderlich, kann bei 50 bis 200°C, bevorzugt 70 bis 100°C, getrocknet werden.

Geeignete Tetrafluorethylenpolymerisat-Emulsionen sind handlsübliche Produkte und werden beispielsweise von der Firma DuPont als Teflon® 30 N angeboten.

Die erfindungsgemäßen Formmassen können weingstens eines der üblichen Additive, wie Gleit- und Entformungsmittel, Nukleiermittel, Antistatika, Stabilisatoren sowie Farbstoffe und Pigmente enthalten.

Die erfindungsgemäßen Forrnmassen können bis zu 35 Gew.-%, bezogen auf die Gesamt-Formmasse, eines weiteren, gegebenenfalls synergistisch wirkenden Flammschutzmittels enthalten. Beispielhaft werden als weitere Flammschutzmittel organische Halogenverbindungen wie Decabrombisphenylether, Tetrabrombisphenol, anorganische Halogenverbindungen wie Ammoniumbromid, Stickstoffverbindungen, wie Melamin, Melaminformaldehyd-Harze, anorganische Hydroxidverbindungen wie Mg-, Al-Hydroxid, anorganische Verbindungen wie Antimonoxide, Bariummetaborat, Hydroxoantimonat, Zirkonoxid, Zirkonhydroxid, Molybdenoxid. Ammoniummolybdat, Zinkborat, Ammoniumborat, Bariummetaborat, Talk, Silikat. Siliziumoxid und Zinnoxid sowie Siloxanverbindungen genannt.

Die erfindungsgemäßen Formmassen enthaltend die Komponenten A bis F und gegebenenfalls weiteren bekannten Zusätzen wie Stabilisatoren, Farbstoffen, Pigmenten, Gleit- und Entformungsmitteln, Nukleiermittel sowie Antistatika, werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert, wobei die Komponente F vorzugsweise in Form der bereits erwähnten koagulierten Mischung eingesetzt wird.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung ist daher auch ein Verfahren zur Herstellung der Formmassen.

Die erfindungsgemäßen thermoplastischen Formmassen eignen sich aufgrund ihrer ausgezeichneten Flammfestigkeit und Bindenahtfestigkeit und ihrer guten mechanischen Eigenschaften zur Herstellung von Formkörpern jeglicher Art, insbesondere solchen mit erhöhten Anforderungen an Bruchbeständigkeit.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art, z.B. für Haushaltsgeräte wie Saftpressen, Kaffeemaschinen, Mixer, für Büromaschinen, wie Monitore, Drucker, Kopierer oder Abdeckplatten für den Bausektor und Teile für den Kfz-Sektor. Sie sind außerdem auf dem Gebiet der Elektrotechnik einsetzbar, weil sie sehr gute elektrische Eigenschaften haben.

Weiterhin können die erfindungsgemäßen Formmassen beispielsweise zur Herstellung von folgenden Formkörpern bzw. Formteilen verwendet werden:

1. Innenausbauteile für Schienenfahrzeuge (FR)
2. Radkappen
3. Gehäuse von Kleintransformatoren enthaltenden Elektrogeräten
4. Gehäuse für Geräte zur Informationsverbreitung und -Übermittlung
5. Gehäuse und Verkleidung für medizinische Zwecke
6. Massagegeräte und Gehäuse dafür
7. Spielfahrzeuge für Kinder
8. Flächige Wandelemente
9. Gehäuse für Sicherheitseinrichtungen
10. Heckspoiler
11. Wärmeisolierte Transportbehältnisse
12. Vorrichtung zur Haltung oder Versorgung von Kleintieren
13. Formteile für Sanitär- und Badeausrüstungen
14. Abdeckgitter für Lüfteröffnungen
15. Formteile für Garten- und Gerätehäuser
16. Gehäuse für Gartengeräte.

Eine weitere Form der Verarbeitung ist die Herstellung von Formkörpern durch Tiefziehen aus vorher hergestellten Platten oder Folien.

Ein weiterer Gegenstand der vorliegenden Erfindung ist daher auch die Verwendung der erfindungsgemäßen Formmassen zur Herstellung von Formkörpern jeglicher Art, vorzugsweise der oben genannten, sowie die Formkörper aus den erfindungsgemäßen Formmassen.

## Beispiele

### Komponente A

Lineares Polycarbonat auf Basis Bisphenol A mit einer relativen Lösungsviskosität von 1,252, gemessen in $CH_2Cl_2$ als Lösungsmittel bei 25°C und einer Konzentration von 0,5 g/100 ml.

### Komponente B

Pfropfpolymerisat von 45 Gew.-Teilen eines Copolymerisats aus Styrol und Acrylnitril im Verhältnis von 72:28 auf 55 Gew.-Teile teilchenförmigen vernetzten Polybutadienkautschuk (mittlerer Teilchendurchmesser $d_{50}$ = 0,40 µm), hergestellt durch Emulsionspolymerisation.

**Komponente C**

Styrol/Acrylnitril-Copolymerisat mit einem Styrol/Acrylnitril-Gewichtsverhältnis von 72:28 und einer Grenzviskosität von 0,55 dl/g (Messung in Dimethylformamid bei 20°C).

**Komponente D**

Phenoxyphosphazen der Formel

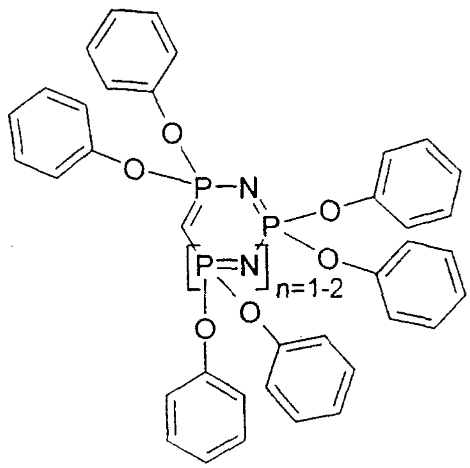

Handelsprodukt P-3800 der Firma Nippon Soda Co., Ltd., Japan.

**Komponente E**

E.1 Triphenylphosphat, Disflamoll TP® der Firma Bayer AG, Leverkusen, Deutschland

E.2 m-Phenylen-bis(di-phenylphosphat), Fyrolflex® der Firma AKZO, Nobel Chemicals GmbH, 52349 Düren, Germany.

E.3 Diphenyl-diisopropyliden-bis(di-phenylphosphat), CR 741 der Daihachi Chemical Ind. Comp., Tokio, Japan.

E.4 Magnesiumdiphenylphosphat

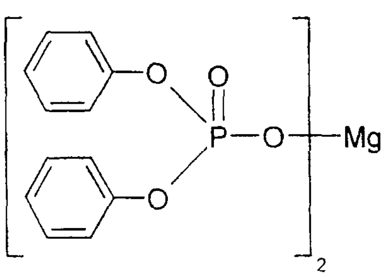

**Komponente F**

Tetrafluorethylenpolymerisat als koagulierte Mischung aus einer SAN-Pfropfpolymerisat-Emulsion gemäß o.

g. Komponente B in Wasser und einer Tetrafluorethylenpolymerisat-Emulsion in Wasser. Das Gewichtsverhältnis Pfropfpolymerisat B zum Tetrafluorethylenpolymerisat F in der Mischung ist 90 Gew.-% zu 10 Gew.-%. Die Tetrafluorethylenpolyermisat-Emulsion besitzt einen Feststoffgehalt von 60 Gew.-%, der mittlere Teilchendurchmesser liegt zwischen 0,05 und 0,5 µm. Die SAN-Pfropfpolymerisat-Emulsion besitzt einen Feststoffgehalt von 34 Gew.-% und einen mittleren Latexteilchendurchmesser von $d_{50}$ = 0,28 µm.

**Herstellung von F**

Die Emulsion des Tetrafluorethylenpolymerisats (Teflon 30 N der Fa. DuPont) wird mit der Emulsion des SAN-Pfropfpolymerisats B vermischt und mit 1,8 Gew.-%, bezogen auf Polymerfeststoff, phenolischer Antioxidantien stabilisiert. Bei 85 bis 95°C wird die Mischung mit einer wäßrigen Lösung von $MgSO_4$ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet. Dieses Pulver kann dann mit den weiteren Komponenten in den beschriebenen Aggregaten compoundiert werden.

**Herstellung und Prüfung der erfindungsgemäßen Formmassen**

Das Mischen der Komponenten erfolgt auf einem 3-l-Innenkneter, Die Formkörper werden auf einer Spritzgießmaschine Typ Arburg 270 E bei 260°C hergestellt.

Die Bestimmung der Wärmeformbeständigkeit nach Vicat B erfolgt gemäß DIN 53 460 (ISO 306) an Stäben der Abmessung 80 x 10 x 4 mm.

Zur Ermittlung der Bindenahtfestigkeit wird die Schlagzähigkeit nach DIN 53 453 an der Bindenaht von beidseitig ausgespritzten Prüfkörpern (Verarbeitungstemperatur 260°C) der Dimension 170 x 10 x 4 mm gemessen.

Das Spannungsrißverhalten (ESC-Verhalten) wurde an Stäben der Abmessung 80 x 10 x 4 mm, Verarbeitungstemperatur 260°C, untersucht. Als Testmedium wurde eine Mischung aus 60 Vol.-% Toluol und 40 Vol.-% Isopropanol verwendet. Die Probekörper wurden mittels einer Kreisbogenschablone vorgedehnt (Vordehnung in Prozent) und bei Raumtemperatur im Testmedium gelagert. Das Spannungsrißverhalten wurde über die Rißbildung bzw. den Bruch in Abhängigkeit von der Vordehnung im Testmedium beurteilt.

Tabelle:

| **Formmassen und ihre Eigenschaften** | | | | | | | |
|---|---|---|---|---|---|---|---|
| | 1 (Vgl.) | 2 | 3 | 4 | 5 | 6 | 7 |
| Komponente A | 66,7 | 66,7 | 66,7 | 66,7 | 66,7 | 66,7 | 66,7 |
| B | 7,3 | 7,3 | 7,3 | 7,3 | 7,3 | 7,3 | 7,3 |
| C | 9,4 | 9,4 | 9,4 | 9,4 | 9,4 | 9,4 | 9,4 |
| D | 15,0 | 12,0 | 9,0 | 12,0 | 9.0 | 6,0 | 12,0 |
| E.1 | - | - | - | - | - | 1,5 | - |
| E.2 | - | 3,0 | 6,0 | - | - | 4,5 | - |
| E.3 | - | - | - | 3,0 | 6,0 | - | - |
| E.4 | - | - | - | - | - | - | 3,0 |
| F | 4,2 | 4,2 | 4,2 | 4,2 | 4,2 | 4,2 | 4,2 |
| ak (ISO 180/1A) | 51 | 55 | 55 | 58 | 60 | 53 | 62 |
| Vicat B 120 (ISO 306) | 103 | 98 | 95 | 100 | 97 | 99 | 104 |
| UL 94 V 1,6 mm | V0 | V0 | V0 | V0 | V0 | V0 | V0 |
| ESC-Verhalten Bruch bei $\varepsilon_x$ [%] | 1,6 | 1,8 | 1,8 | 2,0 | 2,0 | 2,0 | 2,4* |
| $a_n$ (Bindenaht) (DIN 53 453) | 14,0 | 18,5 | 15,9 | 17,5 | 19,5 | 12,2 | 15,3 |

*kein Bruch

**Patentansprüche**

1. Thermoplastische Formmassen enthaltend

A) 40 bis 99 Gew.-Teile aromatisches Polycarbonat und/oder Polyestercarbonat

B) 0,5 bis 60 Gew.-Teile Pfropfpolymerisat von

B.1) 5 bis 95 Gew.-% einem oder mehreren Vinylmonomeren auf

B.2) 95 bis 5 Gew.-% einer oder mehrerer Pfropfgrundlagen mit einer Glasumwandlungstemperatur <10°C

C) 0 bis 45 Gew.-Teile mindestens eines thermoplastischen Polymers, ausgewählt aus der Gruppe der Vinyl (co)polymerisate und Polyalkylenterephthalate,

D) 0,1 bis 50 Gew.-Teile mindestens einer Komponente, ausgewählt aus der Gruppe der Phosphazene der Formeln

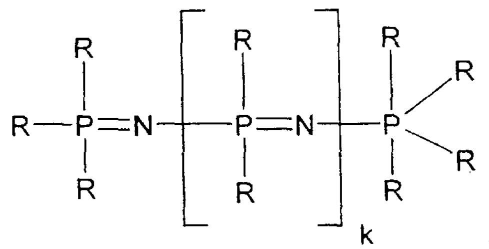

(Ia),

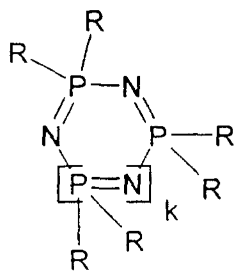

(Ib),

worin

R jeweils gleich oder verschieden ist und für Amino, jeweils gegebenenfalls halogeniertes $C_1$- bis $C_8$-Alkyl, oder $C_1$-$C_8$-Alkoxy, jeweils gegebenenfalls durch Alkyl und/oder Halogen substituiertes $C_5$- bis $C_6$-Cycloalkyl, $C_6$- bis $C_{20}$-Aryl, $C_6$ bis $C_{20}$-Aryloxy, oder $C_7$- bis $C_{12}$-Aralkyl steht und

k für 0 oder eine Zahl von 1 bis 15 steht,

E) 0,5 bis 20 Gew.-Teile ausgewählt aus mindestens einer Phosphorverbindung der allgemeinen Formeln (IIa), (IIb), (IIc) und (IId),

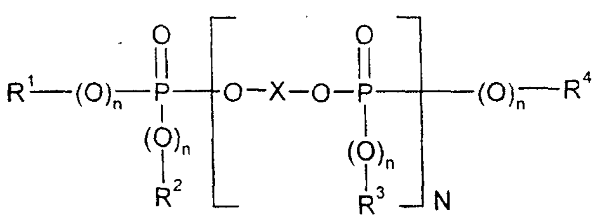

(IIa),

worin

$R^1$, $R^2$, $R^3$ und $R^4$, unabhängig voneinander jeweils gegebenenfalls halogeniertes $C_1$- bis $C_8$-Alkyl, jeweils gegebenenfalls durch Alkyl und/oder Halogen substituiertes $C_5$- bis $C_6$-Cycloalkyl, $C_6$- bis $C_{20}$-Aryl oder $C_7$- bis $C_{12}$-Aralkyl stehen,

n unabhängig voneinander, 0 oder 1

N 0 bis 30 und

X einen ein- oder mehrkernigen aromatischen Rest mit 6 bis 30 C-Atomen bedeuten;

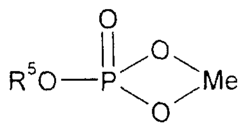

(IIb)

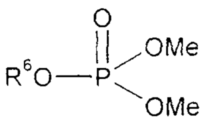

(IIc)

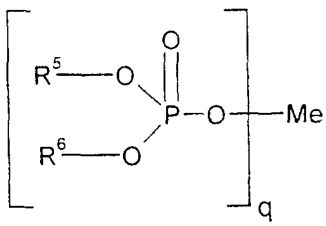

(IId)

worin

$R^5$ und $R^6$ unabhängig voneinander, gegebenenfalls halogeniertes $C_1$-$C_{24}$-Alkyl, jeweils gegebenenfalls durch Halogen und/oder $C_1$-$C_{10}$-Alkyl substituiertes $C_5$-$C_6$-Cycloalkyl, $C_6$-$C_{20}$-Aryl oder $C_7$-$C_{12}$-Aralkyl bedeuten,

oder

$R^5$ und $R^6$ im Falle der Formel (IId) eine Alkyl-Kette bilden,
Me für ein Metall, ausgewählt aus der 1. bis 3. Hauptgruppe und VIII, 1B und 2B der Nebengruppe des Periodensystems steht,
und q durch die Wertigkeit des Metallions bestimmt wird,

F) 0 bis 5 Gew.-Teile fluoriertes Polyolefin.

**2.** Formmassen gemäß Anspruch 1, enthaltend
60 bis 98,5 Gew.-Teile A
1 bis 40 Gew.-Teile B
0 bis 30 Gew.-Teile C
2 bis 35 Gew.-Teile D
1 bis 18 Gew.-Teile E und
0,1 bis 1 Gew.-Teile F

**3.** Formmassen gemäß Anspruch 1 und 2 enthaltend
2 bis 25 Gew.-Teile B
5 bis 25 Gew.-Teile D
2 bis 15 Gew.-Teile E
0,1 bis 0,5 Gew.-Teile F.

**4.** Formmassen gemäß der vorhergehenden Ansprüche enthaltend 2 bis 25 Gew.-Teile C.

**5.** Formmassen gemäß der vorhergehenden Ansprüche, wobei der mittlere Teilchendurchmesser $d_{50}$ oder Komponente B 0,05 bis 5 µm beträgt.

**6.** Formmassen gemäß der vorhergehenden Ansprüche, wobei der mittlere Teilchendurchmesser $d_{50}$ 0,1 bis 0,5 µm beträgt.

**7.** Formmassen gemäß der vorhergehenden Ansprüche, wobei Vinylmonomere B.1 Gemische aus

B.1.1 50 bis 99 Gew.-Teilen Vinylaromaten und/oder kernsubstituierten Vinylaromaten und/oder Methacrylsäure-($C_1$-$C_4$)-Alkylester und

B.1.2 1 bis 50 Gew.-Teilen Vinylcyanide und/oder (Meth)Acrylsäure-($C_1$-$C_8$)-Alkylester und/oder Derivate ungesättigter Carbonsäuren sind.

**8.** Formmassen gemäß der vorhergehenden Ansprüche, wobei die Pfropfgrundlage B.2 ausgewählt ist aus mindestens einem Kautschuk aus der Gruppe bestehend aus Dienkautschuke, EP(D)M-Kautschuke, Acrylat-, Polyurethan-, Silikon-, Chlorpren- und Ethylen/Vinylacetat-Kautschuke.

**9.** Formmassen gemäß der vorhergehenden Ansprüche, wobei Komponente D ausgewählt ist aus der Gruppe bestehend aus Propoxyphosphazen, Phenoxyphosphazen, Methylphenoxyphosphazen, Aminophosphazen und Fluoralkylphosphazene.

**10.** Formmassen gemäß der vorhergehenden Ansprüche enthaltend wenigstens ein Additiv ausgewählt aus der Gruppe der Gleit- und Entformungsmittel, Nukleiermittel, Antistatika, Stabilisatoren, Farbstoffe und Pigmente.

**11.** Formmassen gemäß der vorhergehenden Ansprüche enthaltend weitere Flammschutzmittel, welche verschieden sind von Komponente E.

**12.** Verfahren zur Herstellung von Formmassen gemäß Anspruch 1, wobei die Komponenten A bis F und gegebenenfalls weiteren Zusätzen vermischt und schmelzcompoundiert werden.

**13.** Verwendung der Formmassen gemäß Anspruch 1 zur Herstellung von Formkörpern.

**14.** Formkörper, hergestellt aus Formmassen gemäß der Ansprüche 1 bis 11.

**15.** Gehäuseteile, gemäß Anspruch 14.

## Claims

**1.** Thermoplastic moulding compositions containing

A) 40 to 99 parts by weight of aromatic polycarbonate and/or polyester carbonate

B) 0.5 to 60 parts by weight of graft polymer of

B.1) 5 to 95 wt.% of one or more vinyl monomers on

B.2) 95 to 5 wt.% of one or more grafting backbones having a glass transition temperature of <10°C,

C) 0 to 45 parts by weight of at least one thermoplastic polymer selected from the group comprising vinyl (co) polymers and polyalkylene terephthalates,

D) 0.1 to 50 parts by weight of at least one component selected from the group comprising phosphazenes of the formulae

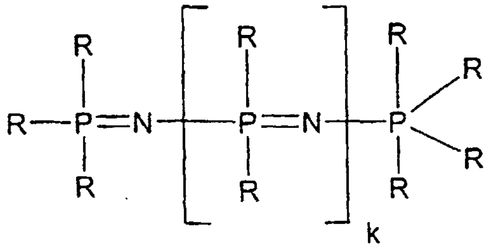

(Ia).

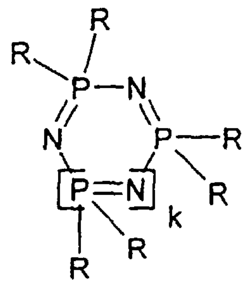

(Ib),

in which

R is in each case identical or different and denotes amino, $C_1$ to $C_8$ alkyl, in each case optionally halogenated, or $C_1$-$C_8$ alkoxy, $C_5$ to $C_6$ cycloalkyl, $C_6$ to $C_{20}$ aryl, $C_6$ to $C_{20}$ aryloxy, or $C_7$ to $C_{12}$ aralkyl, in each case optionally substituted by alkyl and/or halogen, and

k denotes 0 or a number from 1 to 15,

E) 0.5 to 20 parts by weight selected from at least one phosphorus compound of the general formulae (IIa), (IIb), (IIc) and (IId),

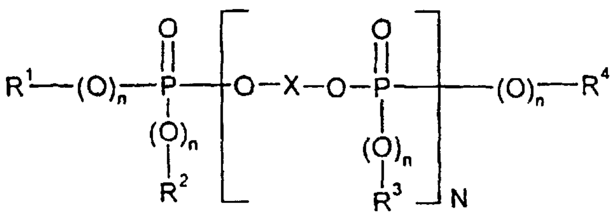

(IIa),

in which

$R^1$, $R^2$, $R^3$ and $R^4$ mutually independently denote $C_1$ to $C_8$ alkyl, in each case optionally halogenated, $C_5$ to $C_6$ cycloalkyl, $C_6$ to $C_{20}$ aryl or $C_7$ to $C_{12}$ aralkyl, in each case optionally substituted by alkyl and/or halogen,

n mutually independently mean 0 or 1

N means 0 to 30 and

X means a mono- or polycyclic aromatic residue having 6 to 30 C atoms;

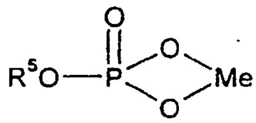

(IIb)

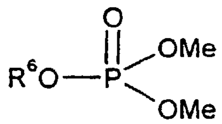

(IIc)

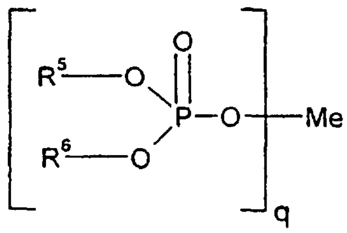

(IId)

in which

| | |
|---|---|
| $R^5$ and $R^6$ | mutually independently mean optionally halogenated $C_1$-$C_{24}$ alkyl, $C_5$-$C_6$ cycloalkyl, $C_6$-$C_{20}$ aryl or $C_7$-$C_{12}$ aralkyl, in each case optionally substituted by halogen and/or $C_1$-$C_{10}$ alkyl, or |
| $R^5$ and $R^6$ | in the case of the formula (IId) form an alkyl chain, |
| Me | denotes a metal selected from main groups 1 to 3 and subgroups VIII, 1B and 2B of the periodic system, |
| and q | is determined by the valency of the metal ion, |

F) 0 to 5 parts by weight of fluorinated polyolefin.

**2.** Moulding compositions according to claim 1 containing
60 to 98.5 parts by weight of A
1 to 40 parts by weight of B
0 to 30 parts by weight of C
2 to 35 parts by weight of D
1 to 18 parts by weight of E and
0.1 to 1 part by weight of F.

**3.** Moulding compositions according to claims 1 and 2 containing
2 to 25 parts by weight of B
5 to 25 parts by weight of D
2 to 15 parts by weight of E
0.1 to 0.5 parts by weight of F.

**4.** Moulding compositions according to the preceding claims containing 2 to 25 parts by weight of C.

**5.** Moulding compositions according to the preceding claims, wherein the average particle diameter $d_{50}$ of component B is 0.05 to 5 μm.

**6.** Moulding compositions according to the preceding claims, wherein the average particle diameter $d_{50}$ is 0.1 to 0.5 µm.

**7.** Moulding compositions according to the preceding claims, wherein vinyl monomers B.1 are mixtures prepared from

B.1.1 50 to 99 parts by weight of vinyl aromatics and/or ring-substituted vinyl aromatics and/or methacrylic acid ($C_1$-$C_4$)-alkyl esters and

B.1.2 1 to 50 parts by weight of vinyl cyanides and/or (meth)acrylic acid ($C_1$-$C_8$)-alkyl esters and/or derivatives of unsaturated carboxylic acids.

**8.** Moulding compositions according to the preceding claims, wherein the grafting backbone B.2 is selected from at least one rubber from the group consisting of diene rubbers, EP(D)M rubbers, acrylate, polyurethane, silicone, chloroprene and ethylene/vinyl acetate rubbers.

**9.** Moulding compositions according to the preceding claims, wherein component D is selected from the group consisting of propoxyphosphazene, phenoxyphosphazene, methylphenoxyphosphazene, aminophosphazene and fluoroalkylphosphazenes.

**10.** Moulding compositions according to the preceding claims containing at least one additive selected from the group comprising lubricants and mould release agents, nucleating agents, antistatic agents, stabilisers, dyes and pigments.

**11.** Moulding compositions according to the preceding claims containing further flame retardants which differ from component E.

**12.** Process for the production of moulding compositions according to claim 1, wherein components A to F and optionally further additives are mixed and melt-compounded.

**13.** Use of the moulding compositions according to claim 1 for the production of mouldings.

**14.** Mouldings produced from moulding compositions according to claims 1 to 11.

**15.** Casing parts according to claim 14.

**Revendications**

**1.** Matières à mouler thermoplastiques contenant :

A) 40 à 99 parties en poids d'un polycarbonate et/ou polyester-carbonate aromatique ;
B) 0,5 à 60 parties en poids d'un polymère greffé, de

B.1) 5 à 95% en poids d'un ou de plusieurs monomères vinyliques sur
B.2) 95 à 5% en poids d'une ou de plusieurs bases de greffage avec une température de transition vitreuse $< 10°C$,

C) 0 à 45 parties en poids d'au moins un polymère thermoplastique, choisi parmi le groupe des (co)polymères vinyliques et poly(téréphtalates d'alcoylène),
D) 0,1 à 50 parties en poids d'au moins un composant, choisi parmi le groupe des phosphazènes des formules :

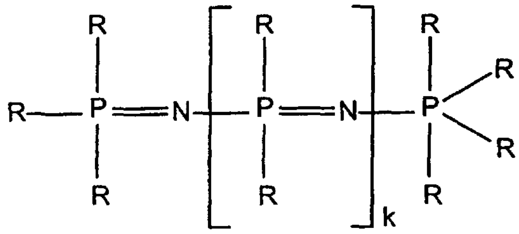

(Ia)

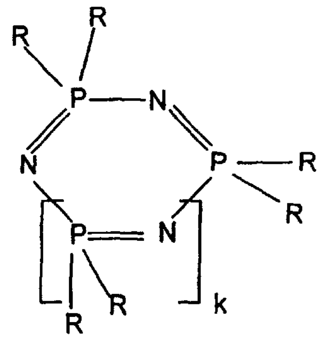

(Ib)

où

R est chaque fois, identique ou différent et représenté un radical amino, un radical alcoyle en $C_1$-$C_8$ ou alcoxy en $C_1$-$C_8$, chaque fois le cas échéant, halogéné, un radical cycloalcoyle en $C_5$-$C_6$, aryle en $C_6$-$C_{20}$, un radical aryloxy en $C_6$-$C_{20}$, ou un radical aralcoyle en $C_7$-$C_{12}$, chaque fois le cas échéant, substitué par un radical alcoyle et/ou par un atome d'halogène,

k représente 0 ou un nombre allant de 1 à 15,

E) 0,5 à 20 parties en poids d'au moins un composé phosphoré choisi parmi les composés des formules générales (IIa), (IIb), (IIc) et (IId) :

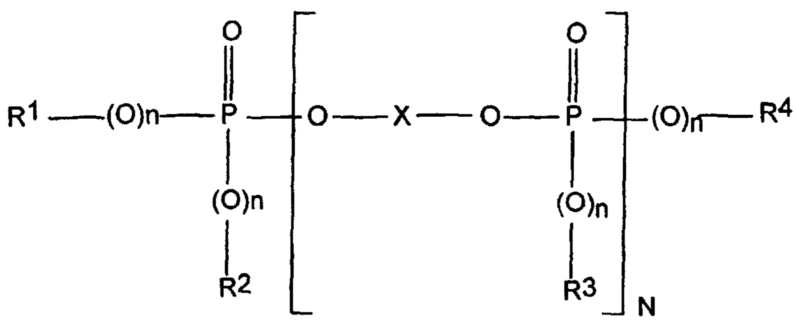

(IIa)

dans laquelle :

$R^1$, $R^2$, $R^3$ et $R^4$ représentent indépendamment l'un de l'autre, un radical alcoyle en $C_1$-$C_8$ le cas échéant halogéné, un radical cycloalcoyle en $C_5$-$C_6$, aryle en $C_6$-$C_{20}$ ou aralcoyle en $C_7$-$C_{12}$, chaque fois le cas échéant substitué par un radical alcoyle et/ou par un atome d'halogène,
n est indépendamment l'un de l'autre, 0 ou 1,
N représente la valeur 0 à 30, et
X représente un reste aromatique mono- ou polycyclique ayant 6 à 30 atomes C :

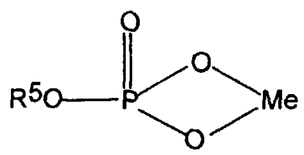

(IIb)

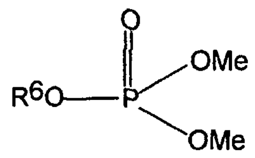

(IIc)

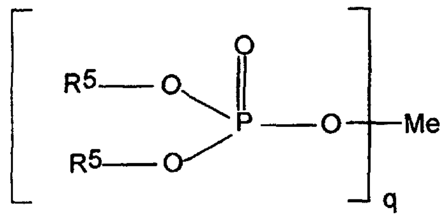

(IId)

où

$R^5$ et $R^6$ représentent indépendamment l'un de l'autre, un radical alcoyle en $C_1$-$C_{24}$ le cas échéant halogéné, un radical cycloalcoyle en $C_5$-$C_6$, aryle en $C_6$-$C_{20}$ ou aralcoyle en $C_7$-$C_{12}$, chaque fois le cas échéant substitué par un radical alcoyle en $C_1$-$C_{10}$ et/ou un atome d'halogène, ou

$R^5$ et $R^6$ dans le cas de la formule (IId), forment une chaîne alcoyle,

Me représente un métal, choisi parmi les groupes principaux 1 à 3 et les groupes secondaires VIII, IB et 2B du système périodique, et

q est déterminé par la valence de l'ion métallique,

F) 0 à 5 parties en poids d'une polyoléfine fluorée.

**2.** Matières à mouler suivant la revendication 1, contenant :

60 à 98,5 parties en poids de A,
1 à 40 parties en poids de B,
0 à 30 parties en poids de C,
2 à 35 parties en poids de D,
1 à 18 parties en poids de E, et
0,1 à 1 partie en poids de F.

**3.** Matières à mouler suivant les revendications 1 et 2, contenant :

2 à 25 parties en poids de B,
5 à 25 parties en poids de D,
2 à 15 parties en poids de E, et
0,1 à 0,5 partie en poids de F.

**4.** Matières à mouler suivant les revendications précédentes, contenant 2 à 25 parties en poids de C.

**5.** Matières à mouler suivant les revendications précédentes, où le diamètre moyen des particules $d_{50}$ du composant B s'élève de 0,05 à 5 µm.

**6.** Matières à mouler suivant les revendications précédentes, où le diamètre moyen des particules $d_{50}$ s'élève de 0,1 à 0,5 µm.

**7.** Matières à mouler suivant les revendications précédentes, où les monomères vinyliques B.1 sont des mélanges de

B.1.1 50 à 90 parties en poids de vinylaromatiques et/ou de vinylaromatiques substitués sur le noyau et/ou d'esters alcoyliques en $C_1$-$C_4$ d'acide méthacrylique, et
B.1.2 1 à 50 parties en poids de vinylacrylamide et/ou d'esters alcoyliques en $C_1$-$C_8$ d'acide (méth)acrylique et/ou de dérivés d'acides carboxyliques.

**8.** Matières à mouler suivant les revendications précédentes, où la base de greffage B.2 est choisie parmi au moins un caoutchouc du groupe consistant en les caoutchoucs diéniques, les caoutchoucs EP(D)M, les caoutchouc acrylate, polyuréthanne, silicone, chloroprène et éthylène/acétate de vinyle.

**9.** Matières à mouler suivant les revendications précédentes, où le composant D est choisi parmi le groupe consistant en propoxyphosphazène, phénoxyphosphazène, méthylphénoxyphosphazène, aminophosphazène et fluoroalcoylphosphazène.

**10.** Matières à mouler suivant les revendications précédentes contenant au moins un additif choisi parmi le groupe des agents lubrifiants et de démoulage, des agents de nucléation, des antistatiques, des stabilisants, des colorants et des pigments.

**11.** Matières à mouler suivant les revendications précédentes, contenant d'autres agents de protection contre les flammes, qui sont différents des composants E.

**12.** Procédé de préparation des matières à mouler suivant la revendication 1, où les composants A à F et le cas échéant les additifs, sont mélangés et malaxés à l'état fondu.

**13.** Utilisation des matières à mouler suivant la revendication 1, pour la préparation d'articles moulés.

**14.** Articles moulés, préparés à partir des masses à mouler suivant les revendications 1 à 11.

**15.** Parties de boîtier, selon la revendication 14.